# EUROPEAN PATENT APPLICATION

(11) **EP 2 002 896 A1**
(43) Date of publication of application: **17.12.2008**
(21) Application number: 07425369.1
(22) Date of filing: 13.06.2007
(51) Int. Cl.: B03B 9/06, B09B 3/00, C04B 28/02

(54) **System for cold treatment and recovery of urban solid refuses**

(71) Applicant: Remat S.r.l., 00195 Roma (IT)
(72) Inventor: Facchiano, Giovanni c/o Remat S.r.l., 00195 Roma (IT)
(74) Representative: Iannone, Carlo Luigi

(57) **Abstract**

The invention relates to a system for treatment of urban solid refuses comprising an urban solid refuses inlet section (1,2,3,4), a section for separation and recovery of plastics (5,6,7,8,9,10,11,12), particularly polyethylene, a section for recovery of iron and selection of organic substances and of inorganic substances (13,14,15,16,17,18,19,20,21,22,23,24,25,26,27,28) downward said plastic separation and recovery section, a section for production of cement products (29,30,31,36), a section for production of pellets (39,40), each section providing a cold treatment of urban solid refuses.

## Description

The present invention relates to a system for cold treatment of urban solid refuses (in the following also indicated as U.S.R.).

More specifically, the invention concerns a system of the above kind permitting a recovery of U.S.R. completely under cold conditions, and manufacturing of building materials and pellets.

Problem of disposal and recovery of urban solid refuses is always more important, and it is dramatically present.

It is known that industrial technologies for disposal of urban solid refuses are now divided in two main branches: laying underground and incineration for production of electric energy.

Last years a remarkable impulse has been given to separation of refuses, introducing differentiated collection directly to containers.

By containers specifically realised for collection of glass and plastics, and paper and paperboard, along with containers for collection of traditional urban solid refuses, it has been reduced amount of glass, paper and plastic bottles in U.S.R.. However, amount of refuses remains a problem for all the industrialised countries, wherein annual production per family is an always growing value.

Surely, disposal of refuses by incineration is advancement with respect to the laying underground technology, since it permits producing electric energy without using petrol. However, U.S.R. incineration, solution disputed by citizens, causes atmospheric pollution and inputs thermal energy within atmosphere, by destroying all the recoverable matters within refuses.

In view of the above, it is well evident the needing of having a system as that proposed by the present invention, permitting solving all the above-mentioned problems.

These and other results are obtained according to the invention by a cold recovery and transformation system for solid urban refuses, providing recovery of polyethylene, iron, aluminium and copper, and production of building materials and pellets.

It is therefore specific object of the present invention a system for treatment of urban solid refuses comprising an urban solid refuses inlet section, a section for separation and recovery of plastics, particularly polyethylene, a section for recovery of iron and selection of organic substances and of inorganic substances downward said plastic separation and recovery section, a section for production of cement products, a section for production of pellets, each section providing a cold treatment of urban solid refuses.

Preferably, according to the invention, said urban solid refuses inlet section provides a hopper and a conveyor belt.

According to the invention, said plastic separation and recovery section provides a bag tearing apparatus apparatus, a belt on which the product is discharged, a separator for recovering plastic materials, discharging them on a further belt, a triturating apparatus, at the exit of said further belt, to obtain uniform dimensions of the material, a stones-removing apparatus, for taking out small stones and earth, making also a pre-washing of the material, means for transportation to a washing-drying apparatus, wherein plastic material is washed again, removing impurities such as paper, wood, glass and other different plastic materials, and dried again, and pressing means for obtaining the final product.

Particularly, said separator is a comb separator.

Furthermore, said means for transportation to the washing - drying apparatus are comprised of an Archimedean screw.

Always according to the invention, said section for recovering iron and selecting organic and inorganic substances provides a deferrization apparatus, separating iron from refuses, means for discharging separated iron, and means for transferring urban solid refuses, up to means for selection of urban solid refuses, with separation of organic substances (humid phase) and inorganic substances (dry phase).

Particularly, said means for selection of urban solid refuses, separating organic and inorganic substances, provide a selection apparatus, within which material is pressed, a plurality of filters, having calibrated holes, for decomposition into organic substance, inorganic substance and water, "dry" phase being send to a triturating apparatus.

Preferably, said pressure is a pressure of 400 atm.

Particularly, pressure is exerted by a hydraulic system supplied by a generation set, with a power of 300 Kw, ensuring continuity of power in case of blackout.

Always according to the invention, said cement products production section provides, at the outlet of a pressing-extruding apparatus, from which inorganic substance is sucked by a turbo-extracting apparatus, and sent to a non ferrous metal selection apparatus, said non ferrous metals being separated and withdrawn by Archimedean screws, discharged within containers, while a vibrating-screening apparatus separates a further portion of organic substances, that will be sent to the dehumidifier of the section for production of pellets, while inorganic substances are sent by a jet extractor to a mixing silos and used as inert material for realisation of cement products.

Still according to the invention, said pellets production section provides a hopper, wherein organic substance is discharged at the outlet from the pressing-extruding apparatus, a drier, supplied with organic substance, means for removing dust - selecting and refining the product, and means for transformation of product into pellets.

Particularly, said means for transformation of product into pellets are comprised of a cube-making press.

Furthermore, said system provides an auxiliary apparatus for sucking dusts, provided with air treatment filters.

The present invention will be now described, for illustrative but not limitative purposes, according to its preferred embodiments, with particular reference to the figures of the enclosed drawings, wherein:
figure 1 is a schematic view of a system according to the invention;
figure 2 is a schematic view of a first particular of the system of figure 1;
figure 3 is a schematic view of a second particular of the system of figure 1;
figure 4 is a schematic view of a third particular of the system of figure 1; and
figure 5 is a schematic view of a fourth particular of the system of figure 1.

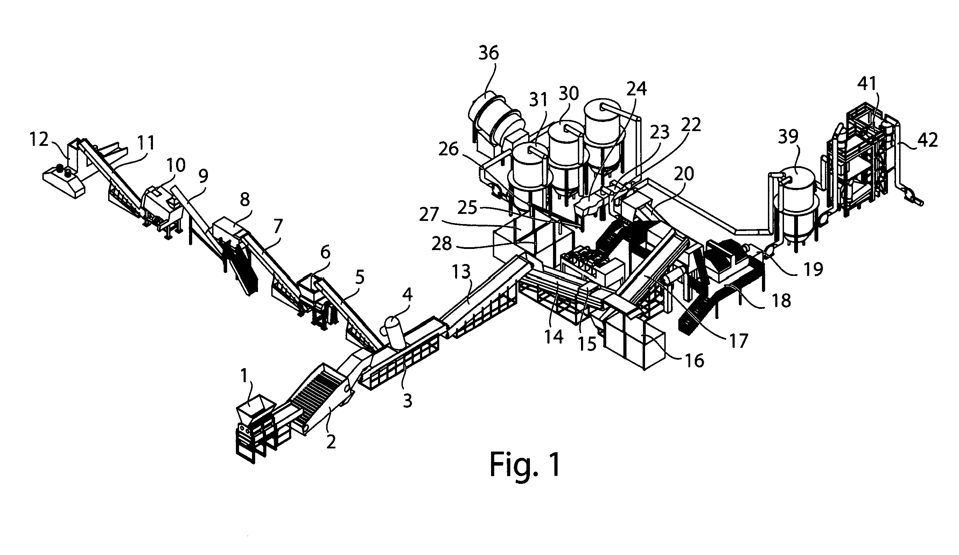

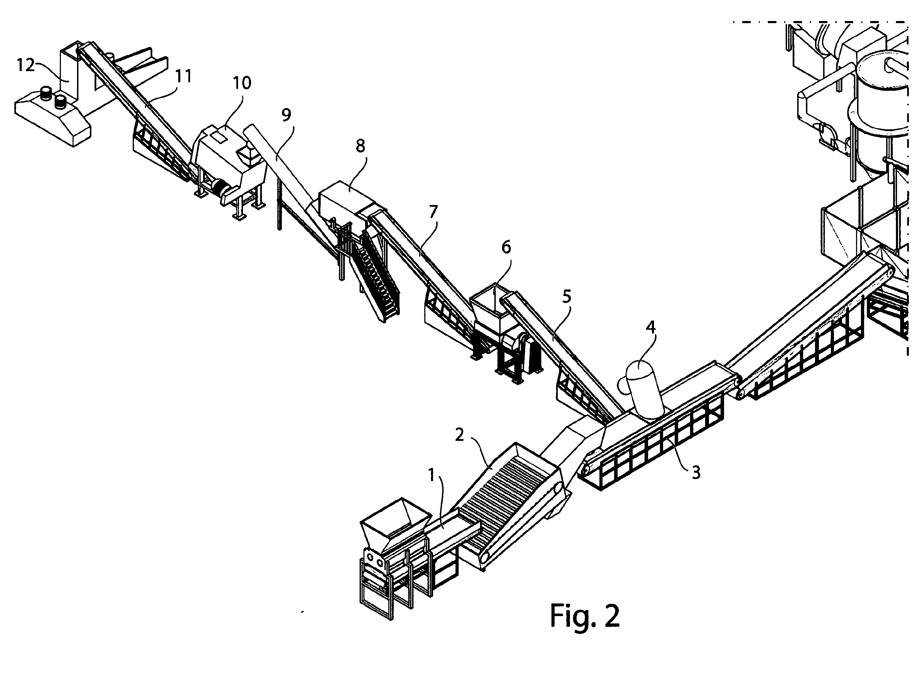

Observing the figures of the enclosed drawings, figure 1 shows a system according to the invention, the peculiarity of which will be described in greater detail with specific reference to figures 2 - 5.

Section of the system according to the invention providing entrance of urban solid refuses (U.S.R.) and recovery of polyethylene is shown in figure 1.

Refuses are introduced within triturating apparatus to be evenly dimensioned and withdrawn from belt 1 to be then introduced within bag tearing apparatus 2 and discharged on belt 3. Comb separator 3 is installed on said belt 3 for recovering polyethylene, which is discharged on belt 5.

Polyethylene is discharged within triturating apparatus 6, at the exit of said belt 5, to obtain uniform dimensions of the material. At the outlet from said triturating apparatus 6, polyethylene is transported by belt 7 to the stones-removing apparatus 8, for taking out small stones and earth, making also a pre-washing of the material.

At the outlet from said apparatus 8, polyethylene is transported from Archimedean screw 9 to the washing-drying apparatus 10, wherein polyethylene is washed again, removing impurities such as paper, wood, glass and other different plastic materials, and dried again. Finally, polyethylene is transported by belt 11 to press 12 to be pressed and thus ready to be sold.

Usually, percentage of polyethylene within refuses is about 4%.

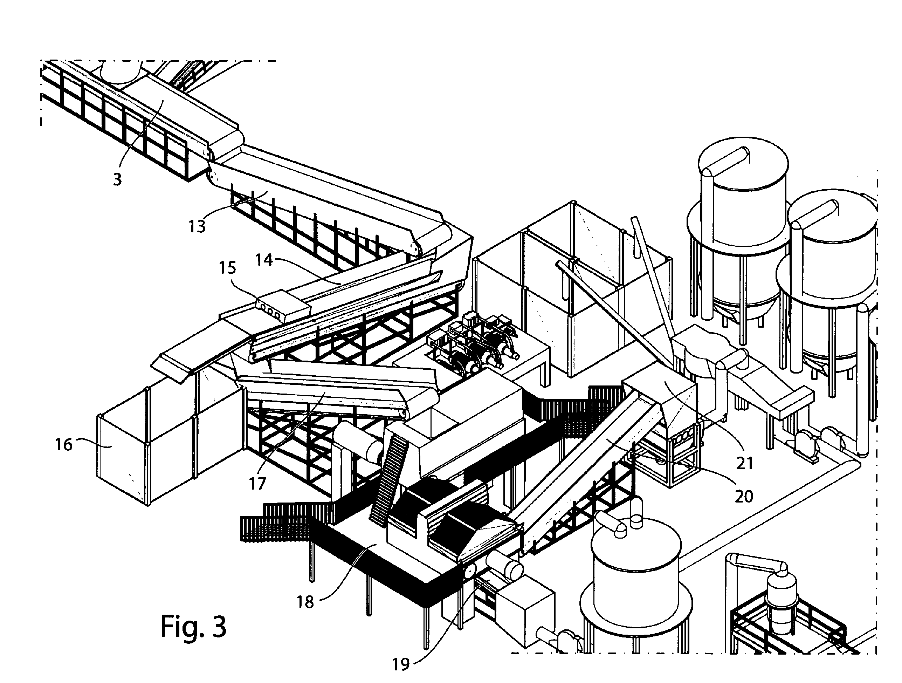

Coming now to observe figure 3, it is shown section for recovery of iron and extrusion of biomass from urban solid refuses.

Refuses, exiting from belt 3, is discharged on belt 13, transferring the same on belt 14, provided with a deferrization apparatus 15, separating iron from refuses. After said separation, iron is discharged within container 16, while urban solid refuses are discharged on belt 17.

Now, selection of urban solid refuses, separated from organic substance (humid phase) and from inorganic substance (dry phase) occurs.

Refuses enter within selection apparatus 18, within which it is subjected to a pressure of 400 atm, and thanks to a plurality of filters having calibrated holes is decomposed into organic substance, inorganic substance and water.

Pressure exerted by hydraulic system is supplied by a generation set, with a power of 300 Kw, ensuring continuity of energy supply in case a blackout should occur.

Percentages of biomass exiting from selection machine 18 are:
- dry substance 32%, with humidity at 20%
- humid substance 26%, with humidity at 50%
- separated water 32%.

Mechanical effect during the compression and extrusion causes a fractioning of the parts comprising the "humid" phase, permitting a quick fermentation process, the priming of which is promoted by growing of temperature of the extruded mass at the exit of the pressing-extruding apparatus.

These conditions permit stabilising organic refuses in a reduced time with respect to those necessary for the organic substance arriving from standard processes for mechanical separation.

Humidity in this phase is at 20%.

"Dry" phase, sent to triturating apparatus 21 by belt 20, is comprised of materials mechanically more resistant such as wood, paper and paperboard, various inert materials, non ferrous materials, ecc.

"Humid" phase, withdrawn by belt 19, is essentially comprised of organic substances (food refuses) with vegetable fibres and inerts.

Physical aspect of product is now that of a hemi fluid paste with fine granulometry and humidity at 50%.

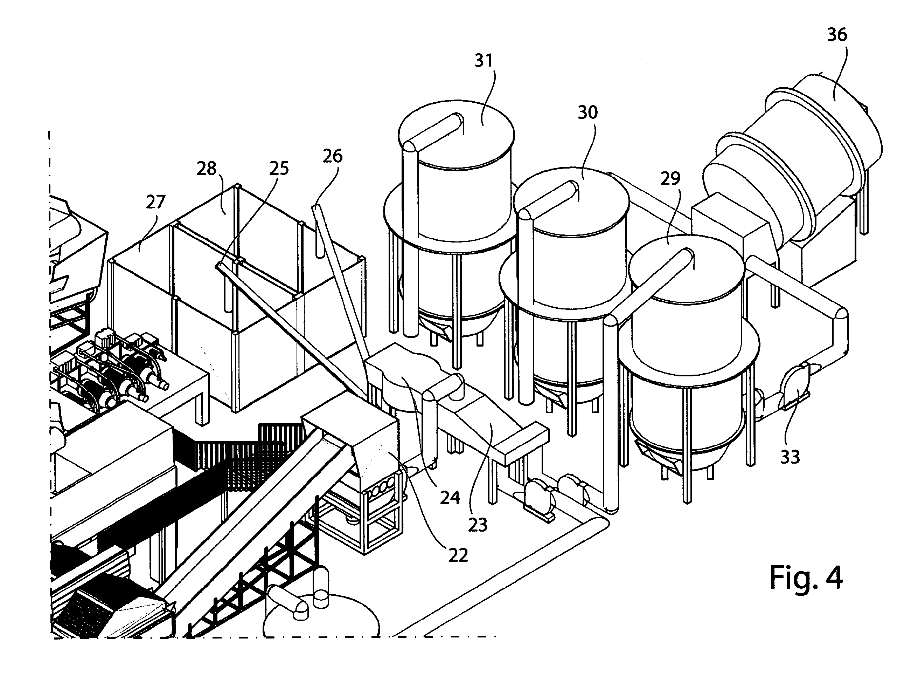

Observing now figure 4, it is shown phase relevant to selection of dry portion, aluminium and copper and to production of cement products.

As to the cement products production, at the outlet of the pressing-extruding apparatus, "dry phase" inorganic substance is sucked by a turbo-extracting apparatus 22, and sent to the non ferrous metal selector 24. Non ferrous metals (copper and aluminium) are separated and withdrawn by Archimedean screws 25 and 26, discharged within containers 27 and 28, while vibrating-screening apparatus 23 separating a further 20% of organic substance (humid part), "20% of humid part will be sent to dehumidifier of the pellet production section that will be described in the following".

Inorganic substance, essentially comprised of paper, wood, small plastic particles and earth, is sent by a jet extractor, to a mixing silos 29 and used as inert material for manufacturing of cement products.

Other two silos 30 and 31 contain cement and sand. Extractors 33 (only one of which can be seen in the figure) supply cement mixer 36 with the proper dosage for realising the mentioned products.

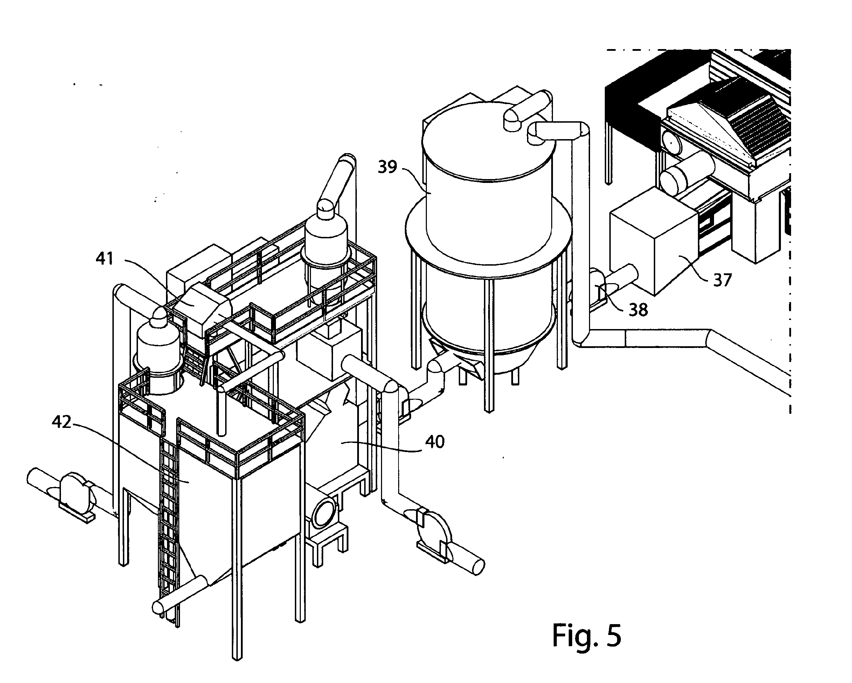

Finally, figure 5 shows section of system according to the invention for production of pellets.

Here, granulometry of material entering is one of the basic parameters on the basis of which line supply system must be decided.

Organic substance or "humid part" is extracted from pressing-extruding apparatus and discharged within hopper 37. From here, it is sent to the drier 39 by an extractor. Line 38 is added to dehumidifier, sending recovered organic substance to vibrating-screening apparatus (about 20%).

Another important parameter for production of pellet is humidity of the material subjected to treatment.

Maximum humidity for supplying pellets apparatus is about 12 - 13%.

In case humidity of material to be subjected to treatment is higher than said values, the line would require a drier or dehydratation group drying the product.

Said machine requires a generator for production of hot hair, or, more generally, of a thermal power making the subject process; it can be supplied in different ways, by saw dust, natural gas and methane gas, or other systems or comburants.

Dried product is then subjected to a possible dust removal - selection and refining apparatus 41, where it is reduced to maximum granulometry for production of 6 - 7 mm pellets, so as to reach homogeneity - uniformity of the product; then, it will be transported to storage and to the following final transformation.

Material prepared is transformed into pellets by a cube-making press 40.

Line of system dedicated to manufacturing of pellets ends with cooling (air/product) 41 and removal of dust from material.

It is also provided an auxiliary apparatus for sucking dusts, provided with air treatment filters.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. System for treatment of urban solid refuses, **characterised in that** it comprises an urban solid refuses inlet section, a section for separation and recovery of plastics, particularly polyethylene, a section for recovery of iron and selection of organic substances and of inorganic substances downward said plastic separation and recovery section, a section for production of cement products, a section for production of pellets, each section providing a cold treatment of urban solid refuses.

2. System for treatment of urban solid refuses according to claim 1, **characterised in that** said urban solid refuses inlet section provides a hopper and a conveyor belt.

3. System for treatment of urban solid refuses according to claim 1 or 2, **characterised in that** said plastic separation and recovery section provides a bag tearing apparatus apparatus, a belt on which the product is discharged, a separator for recovering plastic materials, discharging them on a further belt, a triturating apparatus, at the exit of said further belt, to obtain uniform dimensions of the material, a stones-removing apparatus, for taking out small stones and earth, making also a pre-washing of the material, means for transportation to a washing-drying apparatus, wherein plastic material is washed again, removing impurities such as paper, wood, glass and other different plastic materials, and dried again, and pressing means for obtaining the final product.

4. System for treatment of urban solid refuses according to claim 3, **characterised in that** said separator is a comb separator.

5. System for treatment of urban solid refuses according to claim 3 or 4, **characterised in that** said means for transportation to the washing - drying apparatus are comprised of a Archimedean screw.

6. System for treatment of urban solid refuses according to one of the preceding claims, **characterised in that** said section for recovering iron and selecting organic and inorganic substances provides a deferrization apparatus, separating iron from refuses, means for discharging separated iron, and means for transferring urban solid refuses, up to means for selection of urban solid refuses, with separation of organic substances (humid phase) and inorganic substances (dry phase).

7. System for treatment of urban solid refuses according to claim 6, **characterised in that** said means for selection of urban solid refuses, separating organic and inorganic substances, provide a selection apparatus, within which material is pressed, a plurality of filters, having calibrated holes, for decomposition into organic substance, inorganic substance and water, "dry" phase being send to a triturating apparatus.

8. System for treatment of urban solid refuses according to claim 6 or 7, **characterised in that** said pressure is a pressure of 400 atm.

9. System for treatment of urban solid refuses according to claim 6, 7 or 8, **characterised in that** pressure is exerted by a hydraulic system supplied by an generation set, with a power of 300 Kw, ensuring continuity of power in case of blackout.

10. System for treatment of urban solid refuses according to one of the preceding claims, **characterised in that** said cement products production section provides, at the outlet of a pressing-extruding apparatus, from which inorganic substance is sucked by a turbo-extracting apparatus, and sent to a non ferrous metal selection apparatus, said non ferrous metals being separated and withdrawn by Archimedean screws, discharged within containers, while a vibrating-screening apparatus separates a further portion of organic substances, that will be sent to the dehumidifier of the section for production of pellets, while inorganic substances are sent by a jet extractor to a mixing silos and used as inert material for realisation of cement products.

11. System for treatment of urban solid refuses according to one of the preceding claims, **characterised in that** said pellets production section provides a hopper, wherein organic substance is discharged at the outlet from the pressing-extruding apparatus, a drier, supplied with organic substance, means for removing dust - selecting and refining the product, and means for transformation of product into pellets.

12. System for treatment of urban solid refuses according to claim 11, **characterised in that** said means for transformation of product into pellets are comprised of a cube-making press.

13. System for treatment of urban solid refuses according to one of the preceding claims, **characterised in that** said system provides an auxiliary apparatus for sucking dusts, provided with air treatment filters.
